(19) **Europäisches Patentamt / European Patent Office / Office européen des brevets**

(11) **EP 3 677 496 A1**

(12) # EUROPEAN PATENT APPLICATION
published in accordance with Art. 153(4) EPC

(43) Date of publication:
**08.07.2020 Bulletin 2020/28**

(21) Application number: **18850080.5**

(22) Date of filing: **28.08.2018**

(51) Int Cl.:
**B63B 25/16** (2006.01)   **B63B 25/08** (2006.01)
**B63B 49/00** (2006.01)   **B63H 21/14** (2006.01)

(86) International application number:
**PCT/JP2018/031672**

(87) International publication number:
**WO 2019/044797 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2017  JP 2017167527**

(71) Applicant: **Kawasaki Jukogyo Kabushiki Kaisha Kobe-shi, Hyogo 650-8670 (JP)**

(72) Inventors:
• **IWASAKI, Hidekazu**
  **Kobe-shi, Hyogo 650-8670 (JP)**
• **TAKATA, Hirotaka**
  **Kobe-shi, Hyogo 650-8670 (JP)**
• **SHINMURA, Nobuhiro**
  **Kobe-shi, Hyogo 650-8670 (JP)**
• **ANDOH, Akihiro**
  **Kobe-shi, Hyogo 650-8670 (JP)**

(74) Representative: **Leinweber & Zimmermann European Patent Attorneys Patentanwälte Viktualienmarkt 8 80331 München (DE)**

(54) **SPRAY VAPORIZATION RATE PREDICTION METHOD AND DEVICE, AND OPERATION ASSISTANCE METHOD AND SYSTEM FOR LIQUEFIED GAS CARRYING VESSEL**

(57)    In a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, a coefficient to be multiplied with a vapor quality in the cargo tank in calculating, from the vapor quality, a spray vaporization rate representing a ratio of a flow rate of gas vaporized in the cargo tank with respect to a spray flow rate of the liquefied gas, is calculated in advance on the basis of actual measured data in the liquefied gas carrying vessel, and the spray vaporization rate for optional date and time in a voyage is predicted as a value obtained by multiplying the vapor quality for the optional date and time by the coefficient.

FIG.1

EP 3 677 496 A1

## Description

### Technical Field

The present invention relates to technology for, in a liquefied gas carrying vessel for carrying liquefied gas such as liquefied natural gas (LNG), predicting the vaporization rate of the liquefied gas sprayed into a cargo tank, and to operation assistance technology using the prediction technology.

### Background Art

Conventionally, in a liquefied gas carrying vessel for carrying liquefied gas such as LNG, on a ballast voyage from a discharging port to a loading port, liquefied gas of a predetermined heel amount (remaining liquid amount) is left in a cargo tank, and the liquefied gas is pumped up by a spray pump and sprayed into the cargo tank during the ballast voyage, whereby increase in the temperature of the cargo tank is suppressed.

In some of such liquefied gas carrying vessels, gas (BOG) generated through vaporization of laden liquefied gas in a cargo tank is utilized for vessel propulsion energy, i.e., fuel for a main engine.

In such a liquefied gas carrying vessel that utilizes liquefied gas in a cargo tank for a cooling refrigerant and voyage fuel during a ballast voyage as described above, the heel amount before leaving at a discharging port is generally the sum of a heel amount at a loading port, a fuel consumption amount calculated from a ballast voyage distance and a planned vessel speed, and a margin considering worsening of the marine weather during the voyage and the like. A less heel amount at the discharging port leads to a larger trade amount of liquefied gas, and thus is economical.

PTL 1 proposes a voyage planning system that takes change in the amount of BOG generation due to the weather (i.e., due to the amount of heat input to the cargo tank) into consideration, in making a voyage plan of an LNG carrying vessel as described above. In this voyage planning system, the daily BOG generation amount is calculated on the basis of daily weather information, and optimum daily vessel speed and vessel position are calculated from the daily BOG generation amount, thereby preventing occurrence of deficiency/excess of propulsion energy.

### Citation List

### Patent Literature

PTL 1: Japanese Laid-Open Patent Publication No. H08-318899

## Summary of Invention

### Technical Problem

In calculation for the fuel consumption amount included in the heel amount at the discharging port described above, in general, the BOG generation amount, the pressure, the liquefied gas temperature, the liquid level, the tank temperature, and the like in the cargo tank are estimated under the assumption that liquefied gas sprayed into the cargo tank during a ballast voyage is all vaporized, i.e., under the assumption that the vaporization rate is 1. However, in actuality, while a majority of droplets of liquefied gas sprayed into the cargo tank are vaporized in the cargo tank, some of the droplets are not completely vaporized, ending up dropping to the liquid layer of the heel. In the case where the liquefied gas is LNG, the dropped droplet has a high proportion of heavy components such as ethane and propane because most of a methane component exits from the LNG. Therefore, as spraying is continued, heavy components in the liquid of the heel increase, i.e., the composition of the liquid changes. Thus, the BOG generation amount, the pressure, the liquefied gas temperature, the liquid level, the tank temperature, and the like in the cargo tank estimated as described above can deviate from the actual values. Using the heel amount at the discharging port which includes the fuel consumption amount calculated on the basis of the estimated values deviating from the actual values as described above can cause an event in which the heel amount at the loading port becomes excessive or the heel amount becomes deficient during the ballast voyage, in an actual operation. In addition, there is a possibility that the tank temperature cannot be maintained as predicted.

In order to solve such a problem, technology for more accurately predicting the vaporization rate of liquefied gas sprayed into the cargo tank is needed. That is, if the vaporization rate of the liquefied gas sprayed into the cargo tank can be predicted with high accuracy, values close to the actual values can be estimated for the BOG generation amount, the cargo tank pressure, the liquefied gas temperature, the liquid level, the tank temperature, and the like. Therefore, it is possible to more accurately predict change in the liquid level during a ballast voyage. This is expected to contribute to optimization (minimization) of the heel amount at the discharging port.

The present invention has been made in view of the above circumstances, and an object of the present invention is to provide technology for accurately predicting the vaporization rate of liquefied gas sprayed into a cargo tank of a liquefied gas carrying vessel.

### Solution to Problem

A spray vaporization rate prediction method according to one aspect of the present invention is a spray vaporization rate prediction method for predicting a spray vaporization rate in a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the spray vaporization rate representing a ratio of a flow rate of gas vaporized in the cargo tank with respect to a spray flow rate of the liquefied gas, the method including: calculating, in advance, a coefficient to be multiplied with a vapor quality in the cargo tank in calculating the spray vaporization rate from the vapor quality, on the basis of actual measured data in the liquefied gas carrying vessel; and predicting the spray vaporization rate for optional date and time in a voyage as a value obtained by multiplying the vapor quality for the optional date and time by the coefficient. Here, the vapor quality can be calculated from the pressure in the cargo tank and the saturation temperature of the liquefied gas.

The above spray vaporization rate prediction method may further include: estimating a flow rate of liquid dropping to a liquid layer in the cargo tank without being vaporized with respect to the spray flow rate of the liquefied gas, on the basis of an amount of change in the liquid layer in the cargo tank and an ejection amount of a spray pump for pumping up the liquefied gas to be sprayed, from the cargo tank; and calculating the coefficient on the basis of a ratio of a flow rate obtained by subtracting the flow rate of the dropping liquid from the spray flow rate, with respect to the spray flow rate.

The above spray vaporization rate prediction method can accurately predict the vaporization rate of the liquefied gas sprayed into the cargo tank of the liquefied gas carrying vessel, as compared to the case of assuming that the sprayed liquefied gas is all vaporized. In addition, by using the spray vaporization rate predicted as described above, values close to the actual values can be estimated for the BOG generation amount, the pressure, the liquefied gas temperature, the liquid level, the tank temperature, and the like in the cargo tank.

A spray vaporization rate prediction device according to another aspect of the present invention is a spray vaporization rate prediction device for predicting a spray vaporization rate in a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the spray vaporization rate representing a ratio of a flow rate of gas vaporized in the cargo tank with respect to a spray flow rate of the liquefied gas, the spray vaporization rate prediction device including: a storage device configured to store a coefficient which is calculated in advance on the basis of actual measured data in the liquefied gas carrying vessel and is to be multiplied with a vapor quality in the cargo tank in calculating the spray vaporization rate from the vapor quality; and a processing device including a spray vaporization rate prediction unit configured to predict the spray vaporization rate for optional date and time in a voyage as a value obtained by multiplying the vapor quality for the optional date and time by the coefficient.

In the above spray vaporization rate prediction device, the processing device may further include a coefficient calculation unit configured to: estimate a flow rate of liquid dropping to a liquid layer in the cargo tank without being vaporized with respect to the spray flow rate of the liquefied gas, on the basis of an amount of change in the liquid layer in the cargo tank and an ejection amount of a spray pump for pumping up the liquefied gas to be sprayed, from the cargo tank; calculate the coefficient on the basis of a ratio of a flow rate obtained by subtracting the flow rate of the dropping liquid from the spray flow rate, with respect to the spray flow rate; and store the coefficient into the storage device.

The above spray vaporization rate prediction device can accurately predict the vaporization rate of the liquefied gas sprayed into the cargo tank of the liquefied gas carrying vessel, as compared to the case of assuming that the sprayed liquefied gas is all vaporized. In addition, by using the spray vaporization rate predicted as described above, values close to the actual values can be estimated for the BOG generation amount, the pressure, the liquefied gas temperature, the liquid level, the tank temperature, and the like in the cargo tank.

An operation assistance method for a liquefied gas carrying vessel according to another aspect of the present invention is an operation assistance method for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the method including: calculating, in advance, a coefficient to be multiplied with a vapor quality in the cargo tank in calculating a spray vaporization rate from the vapor quality, on the basis of actual measured data in the liquefied gas carrying vessel, the spray vaporization rate representing a ratio of a flow rate of gas vaporized in the cargo tank with respect to a spray flow rate of the liquefied gas; predicting the spray vaporization rate for optional date and time in a voyage as a value obtained by multiplying the vapor quality for the optional date and time by the coefficient; and estimating at least one of a vaporization gas generation amount, a pressure, a liquefied gas temperature, a liquid level, and a tank temperature in the cargo tank for the optional date and time, using the predicted spray vaporization rate.

In the above operation assistance method for the liquefied gas carrying vessel, as compared to the case of assuming that the sprayed liquefied gas is all vaporized, the vaporization rate of the liquefied gas sprayed into the cargo tank of the liquefied gas carrying vessel can be accurately predicted, and values close to the actual values can be estimated for the BOG generation amount, the cargo tank pressure, the liquefied gas temperature, the liquid level, the tank temperature, and the like.

An operation assistance method for a liquefied gas carrying vessel according to another aspect of the present invention is an operation assistance method for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the method including: calculating, in advance, a coefficient to be multiplied with a vapor quality in the cargo tank in calculating a spray vaporization rate from the vapor quality, on the basis of actual measured data in the liquefied gas carrying vessel, the spray vaporization rate representing a ratio of a flow rate of gas vaporized in the cargo tank with respect to a spray flow rate of the liquefied gas; predicting the spray vaporization rate for optional date and time in a voyage as a value obtained by multiplying the vapor quality for the optional date and time by the coefficient; creating an optimum ballast route that optimizes a predetermined evaluation index, on the basis of individual vessel performance data of the liquefied gas carrying vessel and marine weather data; estimating a total amount of natural boil off gas to be generated from the liquefied gas left in the cargo tank during a voyage through the optimum ballast route, on the basis of the individual vessel performance data, the marine weather data, and the spray vaporization rate; estimating a total amount of spray vaporization gas to be generated through vaporization by the spray operation during the voyage through the optimum ballast route, on the basis of the individual vessel performance data, the marine weather data, and the spray vaporization rate; and calculating a necessary heel amount before a ballast voyage by adding the estimated total amount of the natural boil off gas and the estimated total amount of the spray vaporization gas.

In the above operation assistance method for the liquefied gas carrying vessel, as compared to the case of assuming that the sprayed liquefied gas is all vaporized, the vaporization rate of the liquefied gas sprayed into the cargo tank of the liquefied gas carrying vessel can be accurately predicted, and a value close to the actual value can be estimated for the necessary heel amount. Thus, the heel amount before leaving at a discharging port is optimized (minimized), whereby the trade amount of liquefied gas can be optimized (maximized).

Each of the above operation assistance methods for the liquefied gas carrying vessel may further include: estimating a flow rate of liquid dropping in a liquid state to a liquid layer in the cargo tank with respect to the spray flow rate, on the basis of an amount of change in the liquid layer in the cargo tank and an ejection amount of a spray pump for pumping up the liquefied gas to be sprayed, from the cargo tank; and calculating the coefficient on the basis of a ratio of a flow rate obtained by subtracting the flow rate of the dropping liquid from the spray flow rate, with respect to the spray flow rate.

An operation assistance system for a liquefied gas carrying vessel according to another aspect of the present invention is an operation assistance system for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the operation assistance system including: a communication device communicable with the liquefied gas carrying vessel; a processing device; and a storage device. The storage device stores a coefficient which is calculated in advance on the basis of actual measured data acquired from the liquefied gas carrying vessel and is to be multiplied with a vapor quality in the cargo tank in calculating a spray vaporization rate from the vapor quality, the spray vaporization rate representing a ratio of a flow rate of gas vaporized in the cargo tank with respect to a spray flow rate of the liquefied gas. The processing device includes a spray vaporization rate prediction unit configured to predict the spray vaporization rate for optional date and time in a voyage as a value obtained by multiplying the vapor quality for the optional date and time by the coefficient, and a tank state estimation unit configured to estimate at least one of a vaporization gas generation amount, a pressure, a liquefied gas temperature, a liquid level, and a tank temperature in the cargo tank for the optional date and time, using the predicted spray vaporization rate.

In the above operation assistance system for the liquefied gas carrying vessel, as compared to the case of assuming that the sprayed liquefied gas is all vaporized, the vaporization rate of the liquefied gas sprayed into the cargo tank of the liquefied gas carrying vessel can be accurately predicted, and values close to the actual values can be estimated for the BOG generation amount, the pressure, the liquefied gas temperature, the liquid level, the tank temperature, and the like in the cargo tank.

An operation assistance system for a liquefied gas carrying vessel according to another aspect of the present invention is an operation assistance system for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the operation assistance system including: a communication device communicable with the liquefied gas carrying vessel; a processing device; and a storage device. The storage device includes: a first storage unit configured to store a coefficient which is calculated in advance on the basis of actual measured data acquired from the liquefied gas carrying vessel and is to be multiplied with a vapor quality in the cargo tank in calculating a spray vaporization rate from the vapor quality, the spray vaporization rate representing a ratio of a flow rate of gas vaporized in the cargo tank with respect to a spray flow rate of the liquefied gas; a second storage unit configured to store individual vessel performance data of the liquefied gas carrying vessel; and a third storage unit configured to store marine weather data of a marine area through which the liquefied gas carrying vessel passes. The processing device includes: a spray vaporization rate prediction unit configured to predict the spray vaporization rate for optional date and time in a voyage as a value obtained by multiplying the vapor quality for the optional date and time by the coefficient; a route creating unit configured to create an optimum ballast route that optimizes a predetermined evaluation index, on the basis of the individual vessel performance data and marine weather data; a first vaporization gas amount estimation unit configured to estimate a total amount of natural boil off gas to be generated from the liquefied gas left in the cargo tank during a voyage through the optimum ballast route, on the basis of the individual vessel performance data, the marine weather data, and the spray vaporization rate; a second vaporization gas amount estimation unit configured to estimate a total amount of spray vaporization gas to be generated through vaporization by the spray operation during the voyage through the optimum ballast route, on the basis of the individual vessel performance data, the marine weather data, and the spray vaporization rate; and a heel amount calculation unit configured to calculate a necessary heel amount before a ballast voyage or during a ballast voyage by adding the estimated total amount of the natural boil off gas and the estimated total amount of the spray vaporization gas.

In the above operation assistance system for the liquefied gas carrying vessel, as compared to the case of assuming that the sprayed liquefied gas is all vaporized, the vaporization rate of the liquefied gas sprayed into the cargo tank of the liquefied gas carrying vessel can be accurately predicted, and a value close to the actual value can be estimated for the necessary heel amount. Thus, the heel amount before leaving at a discharging port is optimized (minimized), whereby the trade amount of liquefied gas can be optimized (maximized).

In each of the above operation assistance systems for the liquefied gas carrying vessel, the processing device may further include a coefficient calculation unit configured to: estimate a flow rate of liquid dropping to a liquid layer in the cargo tank without being vaporized with respect to the spray flow rate of the liquefied gas, on the basis of an amount of change in the liquid layer in the cargo tank and an ejection amount of a spray pump for pumping up the liquefied gas to be sprayed, from the cargo tank; calculate the coefficient on the basis of a ratio of a flow rate obtained by subtracting the flow rate of the dropping liquid from the spray flow rate, with respect to the spray flow rate; and store the coefficient into the storage device.

## Advantageous Effects of Invention

The present invention can provide technology for accurately predicting the vaporization rate of liquefied gas sprayed into a cargo tank of a liquefied gas carrying vessel.

## Brief Description of Drawings

FIG. 1 is a schematic configuration diagram of a spray vaporization rate prediction device according to one embodiment of the present invention.
FIG. 2 schematically shows the entire structure of an LNG carrying vessel.
FIG. 3 is a schematic configuration diagram of an operation assistance system according to the embodiment of the present invention.
FIG. 4 is a graph showing change, over time, of the generation amount of natural boil off gas per unit time during a ballast voyage, as predicted.
FIG. 5 is a graph showing change, over time, of the generation amount of spray vaporization gas during a ballast voyage, as predicted.

## Description of Embodiments

Hereinafter, embodiments of the present invention will be described with reference to the drawings. In the following description, spray vaporization rate prediction method and device, and operation assistance method and system for a liquefied gas carrying vessel, according to the present invention are applied to an LNG carrying vessel, which is an example of a liquefied gas carrying vessel. However, the present invention is widely applicable to liquefied gas carrying vessels for carrying liquefied gases such as LNG, liquefied petroleum gas (LPG), and liquefied hydrogen.

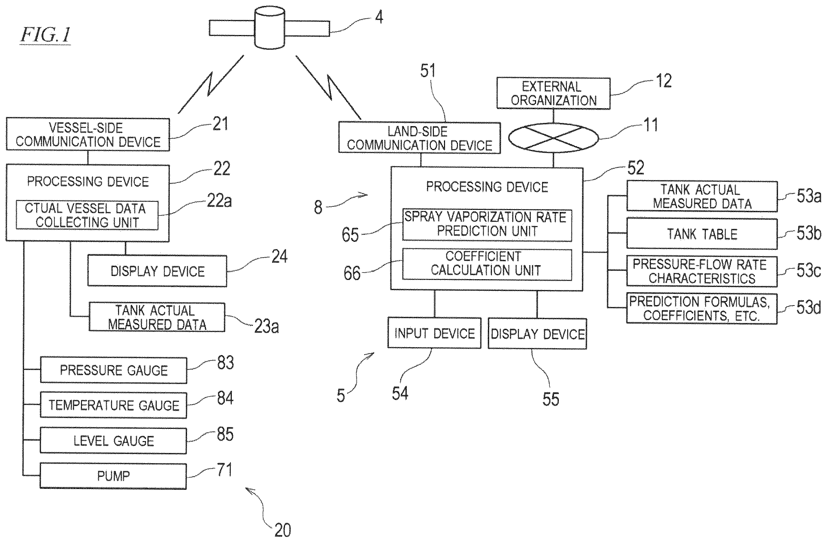

FIG. 1 is a schematic configuration diagram of a spray vaporization rate prediction device 8 according to one embodiment of the present invention. The spray vaporization rate prediction device 8 shown in FIG. 1 predicts the vaporization rate of LNG sprayed into a cargo tank 3 of an LNG carrying vessel 2 by using information collected in on-board information equipment 20 provided to the LNG carrying vessel 2. The spray vaporization rate prediction device 8 according to the present embodiment is included in on-land information equipment 5 which is a data center for the LNG carrying vessel 2. However, the spray vaporization rate prediction device 8 may be included in the on-board information equipment 20.

[Structure of LNG carrying vessel 2]

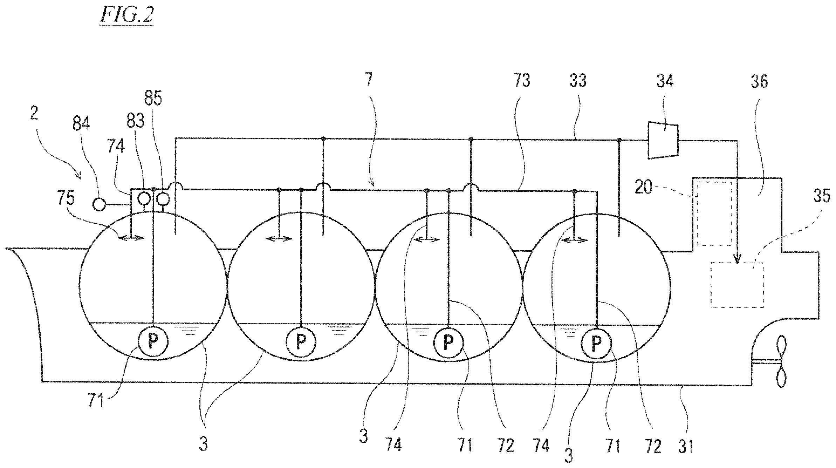

The spray vaporization rate prediction device 8 is applied to the LNG carrying vessel 2 shown in FIG. 2, for example. The LNG carrying vessel 2 includes a hull 31, and a plurality of cargo tanks 3 mounted to the hull 31 and for storing LNG. The hull 31 is provided with a bridge 36 at the rear of the cargo tanks 3. In the present embodiment, the cargo tanks 3 are spherical moss-type tanks. However, the cargo tanks 3 may be membrane tanks or self-supporting prismatic tanks (SPB).

The LNG carrying vessel 2 is provided with a spray device 7 for cooling the cargo tanks 3. The spray device 7 includes spray pumps 71 provided at the bottoms of the respective cargo tanks 3, a collective pipe 73 provided outside the cargo tanks 3, suction pipes 72 connecting the collective pipe 73 and the respective spray pumps 71, spray pipes 74 extending from the collective pipe 73 into the respective cargo tanks 3, and spray nozzles 75 provided at the outlets of the spray pipes 74. The spray device 7 performs spray operation of spraying LNG stored in each cargo tank 3, into the cargo tank 3, via the spray pump 71, the suction pipe 72, the collective pipe 73, the spray pipe 74, and the spray nozzle 75. It is noted that several kinds of spray nozzles 75 having different opening areas are connected to the spray pipe 74, and a switching valve (not shown) for selectively supplying LNG to one or some of the spray nozzles 75 is provided to the spray pipe 74. Thus, it is possible to change the spray flow rate of LNG by selecting the spray nozzle 75 to eject the LNG.

The LNG carrying vessel 2 uses gas generated through vaporization of the LNG, as fuel for propulsion. The natural gas used as the fuel contains natural boil off gas (NBOG) naturally generated in the cargo tank 3, and spray vaporization gas through vaporization of the LNG sprayed into the cargo tank 3. The LNG carrying vessel 2 includes a main engine 35 for driving a screw propeller, and a supply line 33 for guiding the natural gas from the cargo tank 3 to the main engine 35. A compressor 34 is provided to the supply line 33.

The main engine 35 may be any type that obtains motive power through combustion of natural gas. For example, the main engine 35 may be a reciprocating engine, a gas turbine engine, a combination of a gas fired boiler and a steam turbine, or the like. The reciprocating engine may be a gas mono-fuel combustion engine in which only natural gas is combusted, or may be a dual fuel engine in which one or both of natural gas and fuel oil are combusted.

[Configuration of on-board information equipment 20]

The on-board information equipment 20 shown in FIG. 1 is provided in the bridge 36 of the LNG carrying vessel 2. The on-board information equipment 20 includes a vessel-side communication device 21, a processing device 22, a storage device 23a, and a display device 24. In FIG. 1, a box denoted by 23a represents the storage device 23a, and information stored in the storage device 23a is shown in this box.

The processing device 22 includes a processor, a communication interface, a storage unit, and the like (all not shown). The processing device 22 performs processing as a tank actual measured data collecting unit 22a by the processor reading and executing programs (tank actual measured data collecting program, etc.) stored in advance in the storage unit. Through control by the processor, for example, the communication interface transmits/receives data to/from various vessel mounted devices such as the spray pumps 71, and receives detection signals from various vessel mounted devices such as a pressure gauge 83, a temperature gauge 84, and a level gauge 85, with use of wireless or wired communication means.

The pressure gauge 83 detects the pressure in the gas space in the cargo tank 3. The temperature gauge 84 detects the temperature (LNG spray temperature) of LNG ejected from the spray nozzle 75. The level gauge 85 detects the liquid level which is the liquid surface level of the cargo tank 3. The spray pump 71 is provided with a meter for detecting the ejection pressure and the ejection amount thereof, or the ejection pressure and the ejection amount can be calculated from the rotation speed of the spray pump 71 by using a certain correspondence relationship.

The tank actual measured data collecting unit 22a acquires information from at least the spray pump 71, the pressure gauge 83, the temperature gauge 84, and the level gauge 85, and generates tank actual measured data including at least the ejection pressure and the ejection amount of the spray pump 71, the internal pressure of the cargo tank 3, the LNG spray temperature, the liquid level of the cargo tank 3, and the tank temperature. The tank actual measured data collecting unit 22a stores the generated tank actual measured data into the storage device 23a, and outputs the same to the vessel-side communication device 21. The vessel-side communication device 21 transmits the tank actual measured data to a land-side communication device 51 of the on-land information equipment 5 via a vessel-land communication system using a communication satellite 4.

[Configuration of on-land information equipment 5]

The on-land information equipment 5 is provided with the spray vaporization rate prediction device 8. The spray vaporization rate prediction device 8 includes the land-side communication device 51, a processing device 52, an input device 54, a display device 55, and various storage devices 53a to 53d. In FIG. 1, boxes denoted by 53a to 53d represent the storage devices 53a to 53d, and information stored in the storage devices 53a to 53d is shown in the boxes. The storage devices 53a to 53d may be formed as separate storage devices, or a plurality of the storage devices may be formed as a single storage device.

The processing device 52 includes a processor, a communication interface, a storage unit, and the like (all not shown). The processing device 22 performs processing as a spray vaporization rate prediction unit 65 and a coefficient calculation unit 66 by the processor reading and executing programs (vaporization rate prediction program, a coefficient calculation program, etc.) stored in advance in the storage unit. Through control by the processor, the communication interface is capable of transmitting/receiving information to/from an external organization 12 via a network 11, with use of wireless or wired communication means. In the drawing, one external organization 12 is shown as a representative, and there may be a plurality of or plural kinds of servers of the external organization 12 communicably connected to the processing device 52.

The input device 54 is means such as a mouse and a keyboard for receiving an input through a user operation. The input device 54 outputs information inputted through a user's operation, to the processing device 52.

The display device 55 is a display device such as a liquid crystal display, and displays, on the screen, information corresponding to display data given from the processing device 52.

The land-side communication device 51 is capable of mutual communication with the vessel-side communication device 21 mounted to the LNG carrying vessel 2, via the vessel-land communication system using the communication satellite 4. The processing device 52 controls the land-side communication device 51 to transmit information about an optimum route described later, to the vessel-side communication device 21, and acquires information such as the tank actual measured data.

The tank actual measured data is stored in the storage device 53a. The processing device 52 stores the tank actual measured data received from the on-board information equipment 20, into the storage device 53a. Transmission of the tank actual measured data from the on-board information equipment 20 to the on-land information equipment 5 may be performed every time the tank actual measured data is generated, or may be performed every predetermined period. The tank actual measured data generated in the on-board information equipment 20 may be passed to the on-land information equipment 5 via a storage medium.

A tank table (freight tank capacity table of cargo tank 3) is stored in the storage device 53b. The tank table is data that allows calculation of the liquid capacity for which the attitude of the hull and thermal contraction at the time of cooling of the cargo tank 3 are taken into consideration, on the basis of the liquid temperature in the cargo tank 3, the temperature and the density of the gas space vapor in the cargo tank 3, the trim and the list of the vessel, the liquid level in the cargo tank 3, and the like. The tank table is data specific to each cargo tank 3, and is provided from a third-party certification organization.

The pressure-flow rate characteristics (P-Q graph) of the spray nozzle 75 are stored in the storage device 53c. The pressure-flow rate characteristics indicate the relationship between the pressure value and the flow rate value of the spray nozzle 75. The pressure-flow rate characteristics are characteristics specific to the spray nozzle 75, and are provided from manufacturer of the spray nozzle 75.

Data such as prediction formula and a coefficient used or generated when the vaporization rate prediction program and the coefficient calculation program are executed, are stored in the storage device 53d.

[Spray vaporization rate prediction method]

Here, a spray vaporization rate prediction method by the spray vaporization rate prediction device 8 will be described. The spray vaporization rate prediction unit 65 reads and uses information stored in the storage devices 53a to 53c as appropriate, to calculate a "spray vaporization rate X0" which represents the ratio of a flow rate Gg of vaporized gas with respect to a spray flow rate G of the LNG sprayed into the target cargo tank 3. The spray vaporization rate X0 may be calculated for all the cargo tanks 3 mounted to the LNG carrying vessel 2, or may be calculated for one or a plurality of cargo tanks 3 as a representative for all the cargo tanks 3.

Some of droplets of the LNG ejected into the cargo tank 3 from the spray nozzle 75 become gas (i.e., spray vaporization gas obtained by vaporization of the droplets) and the other droplets remain liquid (i.e., the droplets drop to the heel in a liquid state without being vaporized). The flow rates of these (both are mass flow rates) have a relationship shown by the following Expression 1. In Expression 1, G is the spray flow rate (ejection flow rate) of the LNG ejected into the cargo tank 3 from the spray nozzle 75, Gg is the flow rate of the gas, and Gl is the flow rate of the liquid.

$$Gg = G - Gl \quad \ldots \text{<Expression 1>}$$

The flow rate Gg of the gas can be approximated by the following Expression 2 using a vapor quality X.

$$Gg = a \cdot X \cdot G \quad \ldots \text{<Expression 2>}$$

The vapor quality X is a state quantity representing the mass fraction of the gas in a saturated state. The vapor quality X can be calculated through thermophysical property calculation from the internal pressure of the cargo tank 3 and the saturation temperature of the sprayed LNG.

In addition, a is a coefficient with which the spray vaporization rate X0 is proportional to the vapor quality X. The coefficient a also serves to correct the flow rate Gl of the liquid dropping to the liquid layer in the cargo tank 3 without being vaporized with respect to the spray flow rate G. Regarding the flow rate Gl of the liquid that is not vaporized with respect to the spray flow rate G of the LNG, such liquid includes, for example, (i) liquid that is not completely vaporized during dropping in the cargo tank 3, thus dropping to the heel, (ii) liquid colliding with or being reflected by the wall surface of the cargo tank 3, thus dropping in a liquid state to the heel, and (iii) a liquid film formed by concentration of the spray at a part where the temperature is locally reduced on the wall surface of the cargo tank 3, thus dropping to the heel. The coefficient a is a value specific to the cargo tank 3, determined by various factors such as the shape of the cargo tank 3 and the position and the ejection characteristics of the spray nozzle 75.

Solving Expression 1 and Expression 2 simultaneously obtains the following Expression 3 representing the flow rate Gl of the liquid.

$$Gl = (1 - a \cdot X)G \quad \dots \text{<Expression 3>}$$

In addition, from Expression 1 and Expression 2, the following Expression 4 is obtained.

$$a = (G - Gl)/(X \cdot G) \quad \dots \text{<Expression 4>}$$

The coefficient calculation unit 66 calculates the coefficient a using Expression 4 and the tank actual measured data, and stores the coefficient a into the storage device 53d. Here, the spray flow rate G of the LNG to be substituted into Expression 4 can be calculated from the pressure-flow rate characteristics representing the relationship between the pressure value and the flow rate value of the spray nozzle 75. The pressure value of the spray nozzle 75 is substantially equal to the difference between the ejection pressure of the spray pump 71 and the internal pressure of the cargo tank 3 included in the tank actual measured data. As the ejection pressure of the spray pump 71, a pressure value at a position as close to the spray nozzle 75 as possible is measured, and if pressure loss in a flow path from the measurement position to the spray nozzle 75 is subtracted, the calculation accuracy for the flow rate can be improved. In addition, the flow rate Gl of the liquid to be substituted into Expression 4 can be calculated for each cargo tank 3 by considering the mass change amount of the LNG in the heel calculated from the tank table and the liquid level change amount in the cargo tank 3, the amount of natural boil off gas generated from the heel, and the ejection amount of the spray pump 71 regarding the cargo tank 3 that actuates the spray pump 71. The change in the liquid level of the cargo tank 3 can be calculated from the liquid level included in the tank actual measured data. Further, the vapor quality X to be substituted into Expression 4 can be calculated from the LNG temperature and the pressure in the cargo tank 3. The LNG temperature and the pressure in the cargo tank 3 are both included in the tank actual measured data.

The spray vaporization rate prediction unit 65 predicts the flow rate Gl of the liquid and the flow rate Gg of the gas for optional date and time in the voyage, using the coefficient a calculated in advance and the prediction formulas shown by Expression 2 and Expression 3. In addition, the spray vaporization rate prediction unit 65 can calculate the spray vaporization rate X0 [X0 = Gg/(Gg + Gl) = a·X] for optional date and time in the voyage, using the flow rate Gl of the liquid and the flow rate Gg of the gas predicted as described above, or using the coefficient a and the vapor quality X.

As described above, in the spray vaporization rate prediction method according to the present embodiment, for calculating the spray vaporization rate X0 from the vapor quality X in the cargo tank 3, the coefficient a to be multiplied with the vapor quality X is calculated in advance on the basis of the actual measured data in the LNG carrying vessel 2, and then the spray vaporization rate X0 for optional date and time in the voyage is predicted as a value obtained by multiplying the vapor quality X for the optional date and time by the coefficient a.

The spray vaporization rate prediction device 8 according to the present embodiment includes the storage device 53d storing the coefficient a which is calculated in advance on the basis of the actual measured data in the LNG carrying vessel 2 and is to be multiplied with the vapor quality X in the cargo tank 3 in calculating the spray vaporization rate X0 from the vapor quality X, and the processing device 52 including the spray vaporization rate prediction unit 65 for predicting the spray vaporization rate X0 for optional date and time in the voyage as a value obtained by multiplying the vapor quality X for the optional date and time by the coefficient a.

The above spray vaporization rate prediction method and device 8 can accurately predict the vaporization rate of the LNG sprayed into the cargo tank 3 of the LNG carrying vessel 2, as compared to the case of assuming that the sprayed LNG is all vaporized. That is, the spray vaporization rate X0 is closer to the actual value than the vapor quality X which is a theoretical spray vaporization rate. In addition, by using the spray vaporization rate X0 predicted as described above, values close to the actual values can be estimated for the BOG generation amount, the cargo tank pressure, the LNG temperature, the liquid level, the tank temperature, and the like.

In the spray vaporization rate prediction device 8 according to the present embodiment, the processing device 52 further includes the coefficient calculation unit 66 which estimates the flow rate G1 of the liquid dropping to the liquid layer in the cargo tank 3 without being vaporized with respect to the spray flow rate G of the LNG, on the basis of the change amount in the liquid layer in the cargo tank 3 and the ejection amount of the spray pump 71 which pumps up the LNG to be sprayed, from the cargo tank 3, and calculates the coefficient a on the basis of the ratio of a flow rate obtained by subtracting the flow rate Gl of the dropping liquid from the spray flow rate G, with respect to the spray flow rate G. The coefficient calculation unit 66 stores the coefficient a into the storage device 53d.

In the spray vaporization rate prediction method according to the present embodiment, the flow rate Gl of the liquid dropping to the liquid layer in the cargo tank 3 without being vaporized with respect to the spray flow rate G of the LNG is estimated on the basis of the change amount in the liquid layer in the cargo tank 3 and the ejection amount of the spray pump 71 which pumps up the LNG to be sprayed, from the cargo tank 3, and the coefficient a is calculated on the basis of the ratio of a flow rate (i.e., the flow rate Gg of the gas) obtained by subtracting the flow rate Gl of the dropping liquid from the spray flow rate G, with respect to the spray flow rate G.

As described above, the spray flow rate G of the LNG is considered separately as the flow rate Gg of the gas and the flow rate Gl of the liquid not vaporized, whereby the cooling effect for the cargo tank 3 by spray operation, the amount of BOG generated in the cargo tank 3, the heel amount in the cargo tank 3, and the like can be more accurately estimated. It is noted that, in this description, for simplification, it is assumed that the entire amount of the ejection amount of the spray pump 71 is ejected from the spray nozzle 7, and such a phenomenon in which a part of the LNG ejected from the spray pump 71 returns to the heel in the cargo tank 3 through a bypass line without being ejected from the spray nozzle 75, is not taken into consideration.

[Operation assistance system 1]

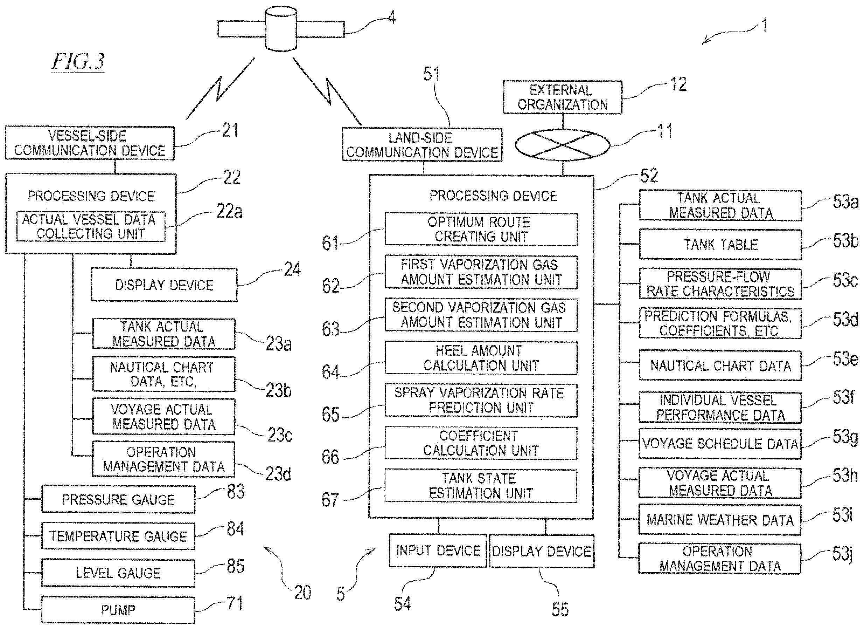

Next, an operation assistance system 1 for the liquefied gas carrying vessel (LNG carrying vessel 2) using the spray vaporization rate prediction technology described above will be described. The operation assistance system 1 shown in FIG. 3 includes the entire spray vaporization rate prediction device 8 described above. In the following description of the operation assistance system 1, the same elements as those of the spray vaporization rate prediction device 8 described above are denoted by the same reference characters, and the same description therefor is omitted.

The operation assistance system 1 includes the on-land information equipment 5, and the on-board information equipment 20 provided to the LNG carrying vessel 2.

The on-board information equipment 20 includes the vessel-side communication device 21, the processing device 22, storage devices 23a to 23d, and the display device 24. In FIG. 3, boxes denoted by 23a to 23d represent the storage devices 23a to 23d, and information stored in the storage devices 23a to 23d is shown in the boxes.

Data such as nautical chart data to be used for a voyage is stored in advance in the storage device 23b. Voyage actual measured data is stored in the storage device 23c of the on-board information equipment 20.

The processing device 22 stores nautical chart data and the like inputted to the processing device 22 via an input device (not shown), into the storage device 23b. In addition, the processing device 22 stores the voyage actual measured data such as the vessel speed and position information (latitude and longitude) measured by various sensors (not shown), into the storage device 23c. The processing device 22 outputs the voyage actual measured data stored in the storage device 23c to the vessel-side communication device 21, and displays the same on the display device 24.

The vessel-side communication device 21 transmits the voyage actual measured data outputted from the processing device 22, to the land-side communication device 51 via the communication satellite 4. In addition, the vessel-side communication device 21 receives operation management data including an optimum ballast route described later, from the land-side communication device 51. The processing device 22 stores the operation management data received by the vessel-side communication device 21, into the storage device 23d, and displays the same on the display device 24.

The on-land information equipment 5 includes the land-side communication device 51, the processing device 52, the input device 54, the display device 55, and various storage devices 53a to 53j. In FIG. 3, boxes denoted by 53a to 53j represent the storage devices 53a to 53j, and information stored in the storage devices 53a to 53j is shown in the boxes. The storage devices 53a to 53j may be formed as separate storage devices, or a plurality of the storage devices may be formed as a single storage device.

Nautical chart data of a marine area through which the LNG carrying vessel 2 passes, and a plurality of recommended routes, are stored in advance in the storage device 53e.

Individual vessel performance data specific to the LNG carrying vessel 2 is stored in advance in the storage device 53f. The individual vessel performance data may be, for example, a hull performance model. The hull performance model is a numerical model or a simulation model for calculating characteristics of the hull 31 in calm water and response characteristics (resistance increase characteristics and hull movement characteristics) of the hull 31 in waves. The hull performance model includes performance obtained by adding influence of disturbance in the actual marine area such as wind, wind wave, and swell to the performance of the hull 31 in calm water.

Voyage schedule data is stored in advance in the storage device 53g. The voyage schedule data includes a loading port and a discharging port, date and time of departure and date and time of arrival in a laden voyage from the loading port to the discharging port, date and time of departure and date and time of arrival in a ballast voyage from the discharging port to the loading port, and the like.

Voyage actual measured data is stored in the storage device 53h. The processing device 52 acquires the voyage actual measured data received by the land-side communication device 51, and stores the voyage actual measured data into the storage device 53h.

Marine weather data of a marine area through which the LNG carrying vessel 2 passes is stored in the storage device 53i. The processing device 52 acquires the marine weather data from the external organization 12 such as the Meteorological Agency or National Oceanic and Atmospheric Administration (NOAA) via the network 11, and stores the acquired marine weather data into the storage device 53i.

Operation management data is stored in the storage device 53j. The processing device 52 performs calculation using various data stored in the storage devices 53a to 53i, to generate the operation management data. For example, when the LNG carrying vessel 2 is on a laden voyage to the discharging port, the operation management data may include the optimum route from the present location to the discharging port, and the optimum ballast route from the discharging port to the loading port. The processing device 52 stores the generated operation management data into the storage device 53j, and outputs the same to the land-side communication device 51. The land-side communication device 51 transmits the operation management data outputted from the processing device 52, to the vessel-side communication device 21 via the communication satellite 4.

The processing device 52 has functions as a route creating unit 61, a first vaporization gas amount estimation unit 62, a second vaporization gas amount estimation unit 63, a heel amount calculation unit 64, a spray vaporization rate prediction unit 65, a coefficient calculation unit 66, and a tank state estimation unit 67. The processing device 52 performs processing as these function units by the processor reading and executing various programs stored in advance in the storage unit.

The route creating unit 61 predicts the marine weather that the LNG carrying vessel 2 will experience during the voyage, from the marine weather data stored in the storage device 53i, calculates vessel speed performance, hull movement, the amount of fuel consumption, and the like in the predicted marine weather on the basis of the individual vessel performance data stored in the storage device 53f, and selects an optimum route from a plurality of given recommended routes. Here, the optimum route is an optimum route that optimizes predetermined evaluation indices such as a safest route, a shortest time route, a minimum fuel consumption route, and a most economical route, and in the present embodiment, the optimum route is a minimum fuel consumption route with a fixed voyage period. When the LNG carrying vessel 2 is on a laden voyage to the discharging port, the route creating unit 61 may calculate the optimum route from the present location to the discharging port, and the optimum ballast route from the discharging port to the loading port. When the LNG carrying vessel 2 is on a ballast voyage, the route creating unit 61 calculates an optimum ballast route from the present location to the loading port.

For a voyage through the optimum route calculated by the route creating unit 61, the tank state estimation unit 67 estimates at least one of the BOG generation amount, the pressure, the LNG temperature, the liquid level, and the tank temperature in the cargo tank 3 for optional date and time. Here, the tank state estimation unit 67 calculates an estimation value for at least one of the BOG generation amount, the pressure, the LNG temperature, the liquid level, and the tank temperature in the cargo tank 3 on the basis of the individual vessel performance data stored in the storage device 53f, the marine weather data stored in the storage device 53i, the predicted value of the spray vaporization rate X0 calculated by the spray vaporization rate prediction unit 65, the tank table stored in the storage device 53b, the tank actual measured data stored in the storage device 53a, and the like.

The values representing the state of the cargo tank 3 such as the BOG generation amount, the pressure, the LNG temperature, the liquid level, and the tank temperature in the cargo tank 3 can be calculated through calculation on the basis of the conservation law of energy and the flow rate of the LNG, using the spray vaporization rate X0, the boil off rate, the heat transfer amount, and the like, while the initial status quantities of the cargo tank 3, the external conditions of the cargo tank 3, the specifications of the cargo tank 3, and the like are set as input conditions. For example, the initial status quantities of the cargo tank 3 include the LNG temperature, the LNG pressure, the LNG composition, and the like in the cargo tank 3. The external conditions of the cargo tank 3 include the outside temperature, the insolation amount, the atmosphere diffusion amount, the atmospheric pressure, the seawater temperature, the wind direction, the wind speed, the BOG extraction amount, the vessel speed, the vessel direction, and the like. The specifications of the cargo tank 3 include the specifications of the cargo tank 3 and pipes, such as shape data, material physical property data, and thermophysical property data.

The tank state estimation unit 67 may cooperate with the route creating unit 61. That is, the route creating unit 61 may search for an optimum ballast route while including, in the evaluation indices, at least one of the BOG generation amount, the pressure, the LNG temperature, the liquid level, and the tank temperature estimated by the tank state estimation unit 67.

The first vaporization gas amount estimation unit 62 estimates a total amount Qn of the natural boil off gas (NBOG) to be generated from the LNG left in the cargo tank 3 during a voyage through the optimum ballast route. Here, the first vaporization gas amount estimation unit 62 calculates the NBOG generation amount (the amount of natural boil off gas) per unit time when the LNG carrying vessel 2 is on a voyage through the optimum ballast route, on the basis of the individual vessel performance data stored in the storage device 53f, the marine weather data stored in the storage device 53i, and the predicted value of the spray vaporization rate calculated by the spray vaporization rate prediction unit 65. The NBOG generation amount varies by the influence of the difference between the outside temperature and the internal temperature of the cargo tank 3, the pressure in the cargo tank 3, oscillation of the liquid surface, and the like. The spray vaporization rate X0 influences the pressure, the LNG temperature, the liquid level, and the tank temperature in the cargo tank 3, and as a result, also influences the BOG generation amount.

For example, the NBOG generation amount per unit time may be calculated on the basis of heat entering the LNG in the cargo tank 3 which is calculated from the outside condition (outside temperature, insolation amount, atmosphere diffusion amount, wind direction/wind speed, etc.) varying every moment, the vessel speed, the vessel direction, the seawater temperature, the LNG temperature, oscillation of the LNG, and the like.

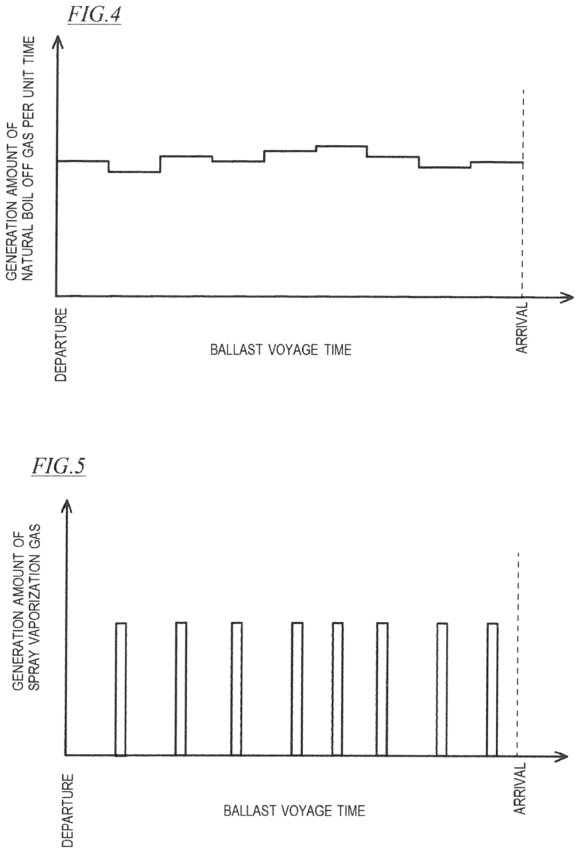

Further, as shown in FIG. 4, the first vaporization gas amount estimation unit 62 estimates the total amount Qn of the NBOG by summing up the NBOG generation amount per unit time over the ballast voyage period. The unit time for the NBOG generation amount may be one hour, twelve hours (half day), or twenty-four hours (one day).

The second vaporization gas amount estimation unit 63 estimates a total amount Qs of the spray vaporization gas to be generated through vaporization by spray operation during a voyage through the optimum ballast route, on the basis of the marine weather data stored in the storage device 53i and the predicted value of the spray vaporization rate X0 calculated by the spray vaporization rate prediction unit 65. Specifically, as shown in FIG. 5, the second vaporization gas amount estimation unit 63 determines spray operation times on the basis of the marine weather data, calculates the spray vaporization gas generation amount for each spray operation on the basis of the spray vaporization rate X0 calculated by the spray vaporization rate prediction unit 65, and sums up the spray vaporization gas generation amounts over the ballast voyage period, thereby estimating the total amount Qs of the spray vaporization gas. In FIG. 5, the spray vaporization gas generation amounts in the respective spray operations are constant. However, the spray vaporization gas generation amount may differ among the spray operations.

More specifically, on the basis of, in particular, temperature information of the marine weather data, the second vaporization gas amount estimation unit 63 determines the spray operation times so that, in a ballast voyage from the discharging port to the loading port, the tank temperature at a reference point (in the case of a moss-type tank, a point on the equator) of the cargo tank 3 is kept under a predetermined temperature (e.g., LNG temperature + 50°C; about -110°C) at the time of arrival at the loading port. For example, a time schedule may be determined so that spray operation will be started when the temperature at the reference point in the cargo tank 3 rises to the predetermined temperature. Alternatively, a time schedule may be determined so that spray operation will be started at such time intervals as to assuredly prevent the temperature at the reference point in the cargo tank 3 from reaching the predetermined temperature.

The heel amount calculation unit 64 calculates a necessary heel amount Qh by adding the total amount Qn of the NBOG estimated by the first vaporization gas amount estimation unit 62 and the total amount Qs of the spray vaporization gas estimated by the second vaporization gas amount estimation unit 63 [Qh = Qn + Qs]. In the case where the fuel consumption amount calculated when the optimum route is created is greater than (Qn + Qs), the difference β therebetween may be added to the heel amount [Qh = Qn + Qs + β]. However, depending on the fuel price, liquid fuel (e.g., fuel oil) may be used as the fuel. The calculated necessary heel amount Qh is outputted from the processing device 52 to the land-side communication device 51, and the land-side communication device 51 transmits the necessary heel amount Qh to the vessel-side communication device 21.

Thus, for the necessary heel amount Qh calculated by the heel amount calculation unit 64, the vaporization rate X0 of the LNG sprayed into the cargo tank has been taken into consideration, so that change in the liquid level of the cargo tank 3 during a ballast voyage is reflected more accurately. Then, determining the heel amount at the discharging port before the ballast voyage on the basis of the above necessary heel amount Qh can optimize (minimize) the heel amount at the discharging port while avoiding such an event in which the heel amount at the loading port becomes excessive or the heel amount becomes deficient during the ballast voyage.

As described above, the operation assistance system 1 according to the present embodiment is an operation assistance system for the LNG carrying vessel 2 (an example of a liquefied gas carrying vessel) including the cargo tank 3 for storing LNG and the spray device 7 for performing spray operation of spraying the LNG into the cargo tank 3, the operation assistance system using gas generated through vaporization of the LNG as fuel for propulsion, and the operation assistance system 1 includes the communication device 51 communicable with the LNG carrying vessel 2, the processing device 52, and the storage devices 53a to 53j. In the operation assistance system 1, the spray vaporization rate X0 representing the ratio of the flow rate Gg of gas vaporized in the cargo tank 3 with respect to the spray flow rate G of the LNG is approximated using the vapor quality X in the cargo tank 3 which is corrected by the coefficient a. The coefficient a also corrects the flow rate Gl of liquid dropping to the liquid layer in the cargo tank without being vaporized with respect to the spray flow rate G.

The storage device 52d stores the coefficient a which is calculated in advance on the basis of the actual measured data acquired from the LNG carrying vessel 2 and is to be multiplied with the vapor quality X in the cargo tank 3 in calculating the spray vaporization rate X0 from the vapor quality X. The processing device 52 includes the spray vaporization rate prediction unit 65 for predicting the spray vaporization rate X0 for optional date and time in a voyage as a value obtained by multiplying the vapor quality X for the optional date and time by the coefficient a, and a tank state estimation unit 67 for estimating at least one of the vaporization gas generation amount, the pressure, the LNG temperature, the liquid level, and the tank temperature in the cargo tank 3 for the optional date and time, using the predicted spray vaporization rate X0.

Similarly, the operation assistance method according to the present embodiment includes: calculating, in advance, the coefficient a to be multiplied with the vapor quality X in the cargo tank 3 in calculating the spray vaporization rate X0 from the vapor quality X, on the basis of the actual measured data in the LNG carrying vessel 2; predicting the spray vaporization rate X0 for optional date and time in a voyage as a value obtained by multiplying the vapor quality X for the optional date and time by the coefficient a; and estimating at least one of the vaporization gas generation amount, the pressure, the LNG temperature, and the liquid level in the cargo tank 3 for the optional date and time, using the predicted spray vaporization rate X0.

In the operation assistance method for the LNG carrying vessel 2, as compared to the case of assuming that the LNG sprayed into the cargo tank 3 is all vaporized, the vaporization rate X0 of the LNG sprayed into the cargo tank 3 of the LNG carrying vessel 2 can be accurately predicted, and values close to the actual values can be estimated for the BOG generation amount, the pressure, the LNG temperature, the liquid level, the tank temperature, and the like in the cargo tank 3.

In the operation assistance system 1 for the LNG carrying vessel 2 according to the present embodiment, the storage device includes: the first storage unit (storage device 53d) for storing the coefficient a which is calculated in advance on the basis of the actual measured data acquired from the LNG carrying vessel 2 and is to be multiplied with the vapor quality X in the cargo tank 3 in calculating the spray vaporization rate X0 from the vapor quality X; the second storage unit (storage device 53f) for storing the individual vessel performance data of the LNG carrying vessel 2; and the third storage unit (storage device 53i) for storing the marine weather data of a marine area through which the LNG carrying vessel 2 passes. In addition, the processing device 52 includes: the spray vaporization rate prediction unit 65 for predicting the spray vaporization rate X0 for optional date and time in a voyage as a value obtained by multiplying the vapor quality X for the optional date and time by the coefficient a; the route creating unit 61 for creating an optimum ballast route that optimizes a predetermined evaluation index, on the basis of the individual vessel performance data and the marine weather data; the first vaporization gas amount estimation unit 62 for estimating the total amount Qn of natural boil off gas to be generated from the LNG left in the cargo tank 3 during a voyage through the optimum ballast route, on the basis of the individual vessel performance data, the marine weather data, and the spray vaporization rate; the second vaporization gas amount estimation unit 63 for estimating the total amount Qs of spray vaporization gas to be generated through vaporization by spray operation during the voyage through the optimum ballast route, on the basis of the individual vessel performance data, the marine weather data, and the spray vaporization rate; and the heel amount calculation unit 64 for calculating the necessary heel amount Qh before the ballast voyage or during the ballast voyage by adding the estimated total amount Qn of the natural boil off gas and the estimated total amount Qs of the spray vaporization gas.

Similarly, the operation assistance method for the LNG carrying vessel 2 according to the present embodiment includes: calculating, in advance, the coefficient a to be multiplied with the vapor quality X in the cargo tank 3 in calculating the spray vaporization rate X0 from the vapor quality X, on the basis of the actual measured data in the LNG carrying vessel 2; predicting the spray vaporization rate X0 for optional date and time in a voyage as a value obtained by multiplying the vapor quality X for the optional date and time by the coefficient a; creating an optimum ballast route that optimizes a predetermined evaluation index, on the basis of the individual vessel performance data of the LNG carrying vessel 2 and the marine weather data; estimating the total amount Qn of natural boil off gas to be generated from the LNG left in the cargo tank 3 during a voyage through the optimum ballast route, on the basis of the individual vessel performance data, the marine weather data, and the spray vaporization rate X0; estimating the total amount Qs of spray vaporization gas to be generated through vaporization by spray operation during the voyage through the optimum ballast route, on the basis of the individual vessel performance data, the marine weather data, and the spray vaporization rate; and calculating the necessary heel amount Qh before the ballast voyage by adding the estimated total amount Qn of the natural boil off gas and the estimated total amount Qs of the spray vaporization gas.

As described above, the total amount Qn of the NBOG and the total amount Qs of the spray vaporization gas that will be generated during a voyage through the optimum ballast route are estimated on the basis of the marine weather data, and the necessary heel amount Qh is calculated by adding the total amount Qn and the total amount Qs. Thus, the necessary heel amount Qh can be accurately calculated. The calculated necessary heel amount Qh may be transmitted to the LNG carrying vessel 2 during a laden voyage. Accordingly, a crew of the LNG carrying vessel 2 can determine the amount of LNG that should be unloaded, so that this LNG amount is maximized, by referring to the necessary heel amount Qh at the discharging port.

**Reference Signs List**

| | |
|---|---|
| 1 | operation assistance system |
| 2 | LNG carrying vessel (example of liquefied gas carrying vessel) |
| 3 | cargo tank |
| 4 | communication satellite |
| 5 | on-land information equipment |
| 7 | spray device |
| 8 | spray vaporization rate prediction device |
| 11 | network |
| 12 | external organization |
| 20 | on-board information equipment |
| 21 | vessel-side communication device |
| 22 | processing device |
| 22a | tank actual measured data collecting unit |
| 23a to 23d | storage device |
| 31 | hull |
| 33 | supply line |
| 34 | compressor |
| 35 | main engine |
| 36 | bridge |
| 51 | land-side communication device |
| 52 | processing device |
| 53a to 53j | storage device |
| 54 | input device |
| 55 | display device |
| 61 | route creating unit |
| 62 | first vaporization gas amount estimation unit |
| 63 | second vaporization gas amount estimation unit |
| 64 | heel amount calculation unit |
| 65 | spray vaporization rate prediction unit |
| 66 | coefficient calculation unit |
| 67 | tank state estimation unit |
| 71 | spray pump |
| 72 | suction pipe |
| 73 | collective pipe |
| 74 | spray pipe |
| 75 | spray nozzle |
| 83 | pressure gauge |
| 84 | temperature gauge |
| 85 | level gauge |

**Claims**

1. A spray vaporization rate prediction method for predicting a spray vaporization rate in a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the spray vaporization rate representing a ratio of a flow rate of gas vaporized in the cargo tank with respect to a spray flow rate of the liquefied gas, the method comprising:

   calculating, in advance, a coefficient to be multiplied with a vapor quality in the cargo tank in calculating the spray vaporization rate from the vapor quality, on the basis of actual measured data in the liquefied gas carrying vessel; and
   predicting the spray vaporization rate for optional date and time in a voyage as a value obtained by multiplying the vapor quality for the optional date and time by the coefficient.

2. The spray vaporization rate prediction method according to claim 1, further comprising:

   estimating a flow rate of liquid dropping to a liquid layer in the cargo tank without being vaporized with respect to the spray flow rate of the liquefied gas, on the basis of an amount of change in the liquid layer in the cargo tank and an ejection amount of a spray pump for pumping up the liquefied gas to be sprayed, from the cargo tank; and
   calculating the coefficient on the basis of a ratio of a flow rate obtained by subtracting the flow rate of the dropping liquid from the spray flow rate, with respect to the spray flow rate.

3. A spray vaporization rate prediction device for predicting a spray vaporization rate in a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the spray vaporization rate representing a ratio of a flow rate of gas vaporized in the cargo tank with respect to a spray flow rate of the liquefied gas, the spray vaporization rate prediction device comprising:

   a storage device configured to store a coefficient which is calculated in advance on the basis of actual measured data in the liquefied gas carrying vessel and is to be multiplied with a vapor quality in the cargo tank in calculating the spray vaporization rate from the vapor quality; and
   a processing device including a spray vaporization rate prediction unit configured to predict the spray vaporization rate for optional date and time in a voyage as a value obtained by multiplying the vapor quality for the optional date and time by the coefficient.

**4.** The spray vaporization rate prediction device according to claim 3, wherein
the processing device further includes a coefficient calculation unit configured to

estimate a flow rate of liquid dropping to a liquid layer in the cargo tank without being vaporized with respect to the spray flow rate of the liquefied gas, on the basis of an amount of change in the liquid layer in the cargo tank and an ejection amount of a spray pump for pumping up the liquefied gas to be sprayed, from the cargo tank, calculate the coefficient on the basis of a ratio of a flow rate obtained by subtracting the flow rate of the dropping liquid from the spray flow rate, with respect to the spray flow rate, and store the coefficient into the storage device.

**5.** An operation assistance method for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the method comprising:

calculating, in advance, a coefficient to be multiplied with a vapor quality in the cargo tank in calculating a spray vaporization rate from the vapor quality, on the basis of actual measured data in the liquefied gas carrying vessel, the spray vaporization rate representing a ratio of a flow rate of gas vaporized in the cargo tank with respect to a spray flow rate of the liquefied gas;
predicting the spray vaporization rate for optional date and time in a voyage as a value obtained by multiplying the vapor quality for the optional date and time by the coefficient; and
estimating at least one of a vaporization gas generation amount, a pressure, a liquefied gas temperature, a liquid level, and a tank temperature in the cargo tank for the optional date and time, using the predicted spray vaporization rate.

**6.** An operation assistance method for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the method comprising:

calculating, in advance, a coefficient to be multiplied with a vapor quality in the cargo tank in calculating a spray vaporization rate from the vapor quality, on the basis of actual measured data in the liquefied gas carrying vessel, the spray vaporization rate representing a ratio of a flow rate of gas vaporized in the cargo tank with respect to a spray flow rate of the liquefied gas;
predicting the spray vaporization rate for optional date and time in a voyage as a value obtained by multiplying the vapor quality for the optional date and time by the coefficient;
creating an optimum ballast route that optimizes a predetermined evaluation index, on the basis of individual vessel performance data of the liquefied gas carrying vessel and marine weather data;
estimating a total amount of natural boil off gas to be generated from the liquefied gas left in the cargo tank during a voyage through the optimum ballast route, on the basis of the individual vessel performance data, the marine weather data, and the spray vaporization rate;
estimating a total amount of spray vaporization gas to be generated through vaporization by the spray operation during the voyage through the optimum ballast route, on the basis of the individual vessel performance data, the marine weather data, and the spray vaporization rate; and
calculating a necessary heel amount before a ballast voyage by adding the estimated total amount of the natural boil off gas and the estimated total amount of the spray vaporization gas.

**7.** The operation assistance method for the liquefied gas carrying vessel according to claim 5 or 6, further comprising:

estimating a flow rate of liquid dropping in a liquid state to a liquid layer in the cargo tank with respect to the spray flow rate, on the basis of an amount of change in the liquid layer in the cargo tank and an ejection amount of a spray pump for pumping up the liquefied gas to be sprayed, from the cargo tank; and
calculating the coefficient on the basis of a ratio of a flow rate obtained by subtracting the flow rate of the dropping liquid from the spray flow rate, with respect to the spray flow rate.

**8.** An operation assistance system for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the operation assistance system comprising:

a communication device communicable with the liquefied gas carrying vessel;

a processing device; and

a storage device, wherein

the storage device stores a coefficient which is calculated in advance on the basis of actual measured data acquired from the liquefied gas carrying vessel and is to be multiplied with a vapor quality in the cargo tank in calculating a spray vaporization rate from the vapor quality, the spray vaporization rate representing a ratio of a flow rate of gas vaporized in the cargo tank with respect to a spray flow rate of the liquefied gas, and

the processing device includes

a spray vaporization rate prediction unit configured to predict the spray vaporization rate for optional date and time in a voyage as a value obtained by multiplying the vapor quality for the optional date and time by the coefficient, and

a tank state estimation unit configured to estimate at least one of a vaporization gas generation amount, a pressure, a liquefied gas temperature, a liquid level, and a tank temperature in the cargo tank for the optional date and time, using the predicted spray vaporization rate.

9. An operation assistance system for a liquefied gas carrying vessel including a cargo tank for storing liquefied gas, and a spray device for performing spray operation of spraying the liquefied gas into the cargo tank, the liquefied gas carrying vessel using gas generated through vaporization of the liquefied gas as fuel for propulsion, the operation assistance system comprising:

a communication device communicable with the liquefied gas carrying vessel;

a processing device; and

a storage device, wherein

the storage device includes

a first storage unit configured to store a coefficient which is calculated in advance on the basis of actual measured data acquired from the liquefied gas carrying vessel and is to be multiplied with a vapor quality in the cargo tank in calculating a spray vaporization rate from the vapor quality, the spray vaporization rate representing a ratio of a flow rate of gas vaporized in the cargo tank with respect to a spray flow rate of the liquefied gas,

a second storage unit configured to store individual vessel performance data of the liquefied gas carrying vessel, and

a third storage unit configured to store marine weather data of a marine area through which the liquefied gas carrying vessel passes, and

the processing device includes

a spray vaporization rate prediction unit configured to predict the spray vaporization rate for optional date and time in a voyage as a value obtained by multiplying the vapor quality for the optional date and time by the coefficient,

a route creating unit configured to create an optimum ballast route that optimizes a predetermined evaluation index, on the basis of the individual vessel performance data and marine weather data,

a first vaporization gas amount estimation unit configured to estimate a total amount of natural boil off gas to be generated from the liquefied gas left in the cargo tank during a voyage through the optimum ballast route, on the basis of the individual vessel performance data, the marine weather data, and the spray vaporization rate,

a second vaporization gas amount estimation unit configured to estimate a total amount of spray vaporization gas to be generated through vaporization by the spray operation during the voyage through the optimum ballast route, on the basis of the individual vessel performance data, the marine weather data, and the spray vaporization rate, and

a heel amount calculation unit configured to calculate a necessary heel amount before a ballast voyage or during a ballast voyage by adding the estimated total amount of the natural boil off gas and the estimated total amount of the spray vaporization gas.

10. The operation assistance system for the liquefied gas carrying vessel according to claim 8 or 9, wherein the processing device further includes a coefficient calculation unit configured to

estimate a flow rate of liquid dropping to a liquid layer in the cargo tank without being vaporized with respect to the spray flow rate, on the basis of an amount of change in the liquid layer in the cargo tank and an ejection amount of a spray pump for pumping up the liquefied gas to be sprayed, from the cargo tank,

calculate the coefficient on the basis of a ratio of a flow rate obtained by subtracting the flow rate of the dropping liquid from the spray flow rate, with respect to the spray flow rate, and store the coefficient into the storage device.

*FIG.1*

EP 3 677 496 A1

*FIG.2*

EP 3 677 496 A1

*FIG.3*

EP 3 677 496 A1

*FIG.4*

*FIG.5*

**INTERNATIONAL SEARCH REPORT**

| | International application No. |
|---|---|
| | PCT/JP2018/031672 |

### A. CLASSIFICATION OF SUBJECT MATTER

Int.Cl. B63B25/16(2006.01)i, B63B25/08(2006.01)i, B63B49/00(2006.01)i, B63H21/14(2006.01)i

According to International Patent Classification (IPC) or to both national classification and IPC

### B. FIELDS SEARCHED

Minimum documentation searched (classification system followed by classification symbols)
Int.Cl. B63B25/16, B63B25/08, B63B49/00, B63H21/14

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 56-120894 A (MITSUBISHI HEAVY INDUSTRIES, LTD.) 22 September 1981, page 1, lower right column, line 7 to page 5, lower left column, line 9, fig. 1-5 (Family: none) | 1-10 |
| A | JP 62-199588 A (MITSUBISHI HEAVY INDUSTRIES, LTD.) 03 September 1987, page 2, upper right column, line 7 to page 4, upper left column, line 15, fig. 1, 2 (Family: none) | 1-10 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19.10.2018 | 06.11.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/031672 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-200068 A (MITSUI ENG & SHIPBUILD CO., LTD.) 01 December 2016, paragraphs [0032], [0033], fig. 2 & KR 10-2017-0142167 A & CN 107614858 A | 1-10 |
| A | JP 2007-57499 A (UNIVERSAL SHIPBUILDING CORP.) 08 March 2007, paragraphs [0023]-[0039], fig. 1-4 (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08318899 B